# EUROPEAN PATENT APPLICATION

(11) **EP 4 443 379 A1**
(43) Date of publication of application: **09.10.2024**
(21) Application number: 22902987.1
(22) Date of filing: 08.10.2022
(51) Int. Cl.: G06T 5/00, G06T 3/40

(54) **THREE-DIMENSIONAL RECOGNITION APPARATUS, TERMINAL, IMAGE ENHANCEMENT METHOD AND STORAGE MEDIUM**

(30) Priority: 07.12.2021 CN 202111486807
(71) Applicant: ZTE Corporation, Shenzhen, Guangdong 518057 (CN)
(72) Inventor: ZHANG, Yongliang, Shenzhen, Guangdong 518057 (CN)
(74) Representative: Betten & Resch
(86) International application number: PCT/CN2022/123743
(87) International publication number: WO 2023/103562

(57) **Abstract**

Provided in the present application are a three-dimensional recognition apparatus, a terminal, an image enhancement method and a storage medium. The three-dimensional recognition apparatus comprises a lens (140) and an optical channel (200). The optical channel (200) is arranged at the inner side of the lens (140), and an RGB camera (440), a three-dimensional recognition assembly and a first color filter (310) are arranged in the optical channel (200), wherein the first color filter (310) is used for reflecting visible light in ambient light to the RGB camera (440); and the first color filter (310) is further used for infrared light, which is received and sent by the three-dimensional recognition assembly, to be transmitted through.

## Description

### CROSS-REFERENCE TO RELATED APPLICATION

This application is filed on the basis of the Chinese patent application No. 202111486807.7 filed December 7, 2021, and claims priority of the Chinese patent application, the entire contents of which are incorporated herein by reference.

### TECHNICAL FIELD

The present invention relates to, but is not limited to the field of smart terminal devices, and in particular to a device for three-dimensional recognition, a user equipment, a method for image enhancement, and a storage medium.

### BACKGROUND

Two schemes for forward 3D recognition are currently provided for mobile terminal devices, i.e., the schemes of the structured light and Time Of Flight (TOF). In order to realize these two schemes, 3D recognition devices, such as infrared cameras and floodlight illuminators, are required to be arranged within the mobile terminals. In addition, forward Red Green Blue (RGB) cameras are typically arranged in parallel between 3D recognition devices, and the footprint of the lens of these devices is relatively large. Since these devices are usually arranged on the top of a display screen of the mobile terminals, a "notch" is formed. As a result, the effective display area of the screen is reduced.

In order to solve this problem, more and more smart terminal devices have begun to adopt under-screen cameras, in which the front RGB camera and device for 3D recognition are arranged at an inner side (under) the display screen. In order to meet the light demand of each device, it is necessary to carry out special treatment to enhance the light transmittance for the corresponding screen display area, such as reducing RGB pixels or reducing RGB pixels to increase the light flux. However, the display area after such special processing is different from other display areas in display effect. If the devices are arranged in parallel as in some current scheme, the area of special processing area will be larger, which will affect the overall display

### SUMMARY

The following is a summary of the subject matter described herein. This summary is not intended to limit the scope of protection of the claims.

Provided are a device for three-dimensional (3D) recognition, a user equipment, a method for image enhancement, and a storage medium in some embodiments of the present invention.

According to an embodiment, a device for three-dimensional (3D) recognition is provided. The device is arranged at an inner side of a display screen of a user equipment. The device includes a lens, and an optical channel arranged at the inner side of the lens. An RGB camera, a 3D recognition assembly, and a first dichroic filter are arranged within the optical channel. The first dichroic filter is configured to reflect visible light of ambient light to the RGB camera, and is further configured to transmit infrared light transmitted and received by the 3D recognition assembly.

According to an embodiment, a user equipment (UE) is provided. The UE includes the device for 3D recognition described above, and a display screen. The device for 3D recognition is arranged at an inner side of the display screen. The area of the display screen corresponding to the lens of the device for 3D recognition is a light transmission enhancement area.

According to an embodiment, a method for image enhancement is provided. The method is applied to a device for three-dimensional (3D) recognition. The device includes a lens and an optical channel. The optical channel is arranged at an inner side of the lens; an Red Green Blue (RGB) camera, an infrared emitter, an infrared dot projector, a first infrared camera, and a first dichroic filter are arranged within the optical channel; visible light of ambient light is reflected and reaches the RGB camera by the first dichroic filter; infrared light of ambient light is transmitted to the first infrared camera through the first dichroic filter; and infrared light emitted by the infrared emitter and the infrared dot projector is transmitted to the lens through the first dichroic filter. The method includes, acquiring a 3D point cloud image and a two-dimensional (2D) image; where the 3D point cloud image is acquired by a first infrared camera from a target reflected light, and the 2D image is acquired by the RGB camera from the target reflected light; and the target reflected light is light reflected by a target object by laser speckle emitted by the infrared dot projector; acquiring a 3D structured light point cloud from the 3D point cloud image, and acquiring a structured light difference value by synchronization of the 3D structured light point cloud and the 2D image; determining RGB reference data according to the 2D image, and performing interpolation on a reference plane according to the RGB reference data and the structured light difference value, so as to increase the density of the reference plane; acquiring a 3D point cloud image layer of the 3D point cloud image, and calibrating the 3D point cloud image layer and the reference plane; and performing stereo registration on the 3D point cloud image layer and the reference plane to acquiring Red Green Blue Depth (RGBD) information.

According to an embodiment, a UE is provided. The UE includes a memory, a processor, and a computer program stored in the memory and executable by the processor which, when executed by the processor causes the processor to carry out the method for image enhancement as described above.

According to an embodiment, a computer-readable storage medium is provided. The medium stores a computer-executable instruction which, when executed by a processor causes the processor to carry out the method for image enhancement as described above.

Other features and advantages of the present invention will be illustrated in the following description, and in part will be apparent from the description, or may be understood by practicing the present invention. The objects and other advantages of the present invention can be achieved and obtained by the structure particularly set forth in the description, claims, and drawings.

### BRIEF DESCRIPTION OF DRAWINGS

The drawings are intended to provide a further understanding of the technical scheme of the present invention, and constitute a part of the specification, and they are intended to illustrate the technical scheme of the present invention in conjunction with the embodiments of the present invention, but are not intended to limit the technical scheme of the present invention.
FIG. 1 depicts a schematic diagram showing a device for 3D recognition according to Embodiment One of the present invention;
FIG. 2 depicts a schematic diagram showing a device for 3D recognition according to Embodiment Two of the present invention;
FIG. 3 depicts a schematic diagram showing a device for 3D recognition according to Embodiment Three of the present invention;
FIG. 4 depicts a schematic diagram showing a device for 3D recognition according to Embodiment Four of the present invention;
FIG. 5 depicts a schematic diagram showing a user equipment according to an embodiment of the present invention;
FIG. 6 depicts a flowchart showing a method for image enhancement according to another embodiment of the present invention;
FIG. 7 depicts a flowchart showing a method for image calibration according to another embodiment of the present invention; and
FIG. 8 depicts a schematic diagram showing a user equipment according to another embodiment of the present invention.

### DETAILED DESCRIPTION

The purpose, technical scheme and advantages of the present invention will become apparent through the following description for various embodiments in conjunction with the drawings. It should be understood that the embodiments described here are intended for illustration but not a limitation of the present invention.

It should be noted that although the devices are shown with individual functional modules in the schematic diagram and the logical sequences are shown in the flow chart, in some cases, the devices can have different modules than those shown and the steps can be executed in a different order than those shown. The terms "first" and "second", if used in the description, claims, and drawings are intended to distinguish similar objects, and do not necessarily imply any specific order or sequence.

Provided are a device for 3D recognition, a user equipment, a method for image enhancement, and a storage medium in some embodiments of the present invention. The device includes a lens; and an optical channel arranged at an inner side of the lens. An RGB camera, a 3D recognition assembly, and a first dichroic filter are arranged within the optical channel. The first dichroic filter is configured to reflect visible light of ambient light to the RGB camera, and is further configured to transmit infrared light transmitted and received by the 3D recognition assembly. According to this embodiment, the RGB lens and the 3D recognition assembly can be simultaneously arranged in the optical channel at an inner side of the lens. Hence, the lens is shared by the front-facing camera and the 3D recognition assembly, such that the area for special treatment to improve the light transmittance is reduced to the size of a single lens, and the display effect of the screen is effectively improved, the user experience is improved.

Some embodiments of the present invention will be further illustrated with reference to the drawings.

According to an embodiment, a device for 3D recognition is provided. The device is arranged at an inner side of a display screen of a user equipment. The device includes:
a lens 140; and
an optical channel/passage/path 200 arranged at an inner side of the lens 140. An RGB camera 440, a 3D recognition assembly, and a first dichroic filter 310 are arranged within the optical channel 200. The first dichroic filter 310 is configured to reflect visible light of ambient light to the RGB camera 440, and to transmit infrared light transmitted and received by the 3D recognition assembly.

It should be noted that the lens 140 is arranged at the inner side of the display screen 120 of the user equipment and close to the light transmission enhancement area 130 of the display screen 120. The parameters and types of the lens 140 are not specifically limited here, so long as the lens can be utilized for in-screen shooting.

It is worth noting that in order to reuse the same lens 140 for shooting and 3D recognition, it is necessary to set both an RGB camera 440 and a 3D recognition assembly in the optical channel 200 at the inner side of the lens 140. The RGB camera 440 is configured to capture with visible light as the light source, while the 3D recognition assembly is generally a structured light assembly or Time Of Flight (TOF) assembly which is configured to receive or emit infrared light. Therefore, when the display screen 130 is placed horizontally, the first dichroic filter 310 can be arranged in the vertical optical channel 200 at the inner side of the lens 140, so as to realize the transmission of infrared light and the reflection of visible light. By splitting the propagation paths of visible light and infrared light, the requirements of the light propagation paths of the RGB camera 440 and the 3D recognition assembly in the same optical channel 200 can be met.

It should be noted that the first dichroic filter 310 can be a visible/infrared light filter film. When the light is incident at a 45-degree angle, the reflectivity of the visible/infrared light filter film is greater than 90% for the visible light band from 0.3 microns to 0.6 microns, and the near-infrared transmittance is greater than 90% for transmission of near-infrared light from 0.75 microns to 2.5 microns. Therefore, infrared light can penetrate the visible/infrared light filter film, and visible light will be specularly reflected by the visible/infrared light filter film, such that the propagation paths are split for visible light and infrared light. The angle/orientation at which the first dichroic filter 310 is arranged can be adjusted according to the practical layout of the optical channel 200, which is not limited in this embodiment.

It is worth noting that different propagation paths are split for infrared light and visible light through the first dichroic filter 310, such that the RGB camera 440 and the 3D recognition assembly arranged within the optical channel 200 can operate as desired. Thereby, the 3D recognition assembly and the RGB camera 440 share a single lens 140. Compared with the scheme that the 3D recognition assembly and the RGB camera are arranged in parallel at the front end of the display screen, the light transmission enhancement area 130 only needs to be sized for the single lens 140, and the footprint is greatly reduced, thus effectively improving the user experience.

Various embodiments of the device for 3D recognition will be described below through several embodiments.

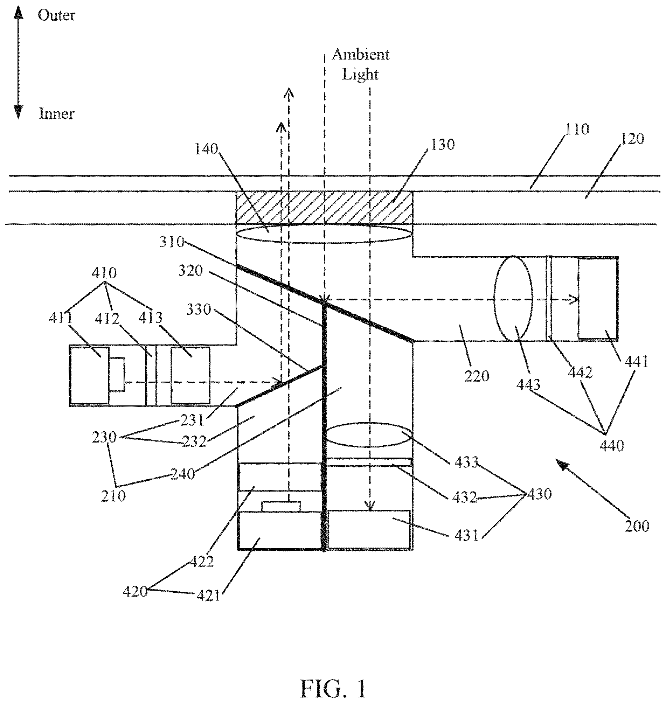

It should be noted that FIGS. 1 to 4 are schematic diagrams of four embodiments of the device for 3D recognition of the present invention. The above four drawings are all taken in the vertical direction when the user equipment is placed horizontally, and the front camera is facing upward.

### EMBODIMENT ONE

Referring to FIG. 1, when the first dichroic filter 310 is arranged in the optical channel 200, the first dichroic filter 310 divides the optical channel 200 into a first channel 210 and a second channel 220. Based on the above description, when the first dichroic filter 310 is tilted at 45 degrees, visible light will be specularly reflected at the first dichroic filter 310, so the second channel 220 can be perpendicular to the main body of the optical channel 200. As a result, visible light reflected at 90 degrees can enter the second channel 220 and finally enter the RGB camera 440 arranged in the second channel 220. It is apparent that, the angle at which the second channel 220 tilts can be adjusted according to the angle at which the first dichroic filter 310 is arranged, as long as visible light can enter the RGB camera 440, which is not limited here.

In this embodiment, the RGB camera 440 includes a second lens set 443, an infrared cut-off filter 442, and a visible light photosensitive substrate 441. Although the first dichroic filter 310 can transmit infrared light, it is not possible to achieve 100% transmittance. Thus, the reflected light can still include some infrared light. In view of this, it is necessary to filter out the infrared light within the light reflected by the first dichroic filter 310 after passing through the second lens set 443, by means of the infrared cut-off filter 442, such that only the visible light is left to enter the visible light photosensitive substrate 441. Photoelectric image signals are generated through the Contact Image Sensor (CIS) chip arranged in the visible light photosensitive substrate 441, and the photoelectric image signals are sent to the main control chip of the user equipment for subsequent imaging processing, which will not be further described here.

In addition, the process of 3D recognition includes infrared light emission and infrared light reception. Therefore, an infrared light separating wall 320 is arranged in the first channel 210 to divide the first channel 210 into a third channel 230 and a fourth channel 240. An infrared light emitting component and an infrared camera can be respectively arranged in the third channel 230 and the fourth channel 240. This embodiment is illustrated with the infrared light emitting component arranged in the third channel 230 and the first infrared camera 430 arranged in the fourth channel 240, by way of example. It should be noted that since the first dichroic filter 310 is transmissive to infrared light, the infrared light separating wall 320 can be arranged along a direction perpendicular to the display screen 120 as shown in FIG. 1. In addition, in order to avoid the mutual interference of transmitted and received infrared light, the infrared light separating wall 320 is closely connected at one end with the first dichroic filter 310, and is closely connected at the other end with the bottom side of the optical channel 200. The position of the infrared light separating wall 320 in the first channel 210 can be determined according to the infrared light emitting component and the first infrared camera 430, as long as the compact layout within the first channel 210.

In addition, in this embodiment, in order to realize both the 3D recognition of structured light and TOF 3D recognition, the first emitter is provided as an infrared dot projector 410 and the second emitter is provided as an infrared emitter 420 by way of example. The infrared dot projector 410 includes successively along the direction at which the infrared light emits, a first Vertical Cavity Surface Emitting Laser (VCSEL) 411, a Wafer Level Optics (WLO) 412 and a Diffractive Optical Elements (DOE) 413. The first VCSEL 411 can be a high-power VCSEL whose emitted infrared laser is calibrated by WLO 412, and is modulated and scattered by DOE 413 to form a speckle pattern. The infrared emitter 420 includes a second VCSEL 421 and a diffuser 422. The second VCSEL 421 can be a low-power VCSEL. The infrared light emitted by the second VCSEL 421 is diffused by the first diffuser 422 to achieve the effect of a low-power floodlight illuminator. The component parameters and specifications of infrared dot projector 410 and infrared emitter 420 can be selected according to practical requirements.

In order to avoid the interference between the infrared light of the infrared dot projector 410 and the infrared emitter 420, the first reflector 330 can be arranged in the third channel 230 to divide the third channel 230 into the first extension channel 231 and the second extension channel 232 shown in FIG. 1. In this embodiment, the infrared dot projector 410 is arranged in the first extension channel 231 and the infrared emitter 420 is arranged in the second extension channel 232. Alternatively, the infrared dot projector 410 is arranged in the second extension channel 232 and the infrared emitter 420 is arranged in the first extension channel 231. In this embodiment, the first extension channel 231, and the second extension channel 232 are perpendicular to each other. As shown in FIG. 1, the first extension channel 231 extends vertically with respect to the first channel 210 on one side of the first channel 210. The first extension channel 231 and the second extension channel 232 can also extend at other angles, so long as infrared light can be emitted under the reflection of the first reflector 330.

The first reflector 330 can be an infrared total reflection lens or a time-division reflector. In the case where the first reflector 330 is an infrared total reflection lens, the infrared dot projector 410 and the infrared emitter 420 can operate concurrently. The angle between the first reflector 330 and the first extension channel 231 is larger than the critical angle of the first reflector 330, such that the angle between the infrared light emitted by the infrared dot projector 410 and the reflector surface is larger than the critical angle, such that the emitted light is totally reflected towards the first dichroic filter 310. Conversely, the angle between the infrared light emitted by the infrared emitter 420 and the reflector surface is smaller than the critical angle, and the infrared light is transmitted to the first dichroic filter 310, such that the infrared lights emitted by the two devices arranged in different extension channels can be transmitted to the first dichroic filter 310. At the same time, when the light is passing through the lens, the slight refraction in and out twice makes the infrared light remain parallel and will not affect the overall transmission effect. In the case where the first reflector 330 is a time-division reflector, the first reflector 330 can be mechanically controlled to raise or lower down, to allow the infrared dot projector 410 and the infrared emitter 420 to be in effect in a time-division manner. When the infrared dot projector 410 is desired to be in effect, the reflector is lowered down by mechanically control to block the infrared light emitted by the infrared emitter 420 and reflect the infrared light emitted by the infrared dot projector 410 to the first dichroic filter 310. When the infrared emitter 420 is desired to be in effect, the reflector is lifted by mechanical control to block the infrared light emitted by the infrared dot projector 410, such that the infrared light emitted by the infrared emitter 420 can pass through the first reflector 330 and reach the first dichroic filter 310. In order to avoid the mutual interference of infrared light, the infrared dot projector 410 and the infrared emitter 420 operate at different infrared frequency bands. In this case, the infrared total reflection lens can also be replaced by an infrared filter that accurately controls the transmission and blockage of different infrared lights, and can be selected according to practical requirements.

The first infrared camera 430 includes, in the fourth channel 240, a first infrared photosensitive substrate 431, a first infrared low-pass filter 432 and a first lens set 433. The specification and parameters of the first lens set 433 can be selected according to practical requirements. The first infrared low-pass filter 432 can also be an infrared low-pass filter or an infrared narrow-band interference filter, as long as which can transmit near-infrared light in a specific band. The first infrared photosensitive substrate 431 can be a CIS photosensitive substrate. The first infrared camera 430 is configured to receive the infrared light emitted by the infrared emitter 420 and the infrared dot projector 410 and reflected by the target object. The infrared light is converted into a photoelectric signal in the first infrared photosensitive substrate 431 which signal can be further processed by the main control chip. The photosensitive principle will not be further illustrated here. In this embodiment, the second VCSEL is a low-power VCSEL, and the low-power unstructured infrared signal emitted by the second VCSEL is mainly intended to pre-estimate the accuracy of the target object. For example, the 2D infrared information can be analyzed by an artificial intelligence algorithm to recognize the object. After the pre-estimation is passed, the infrared speckle pattern projected by the infrared dot projector 410 is reflected by the target object and then received by the first infrared camera 430, such that the depth information of the target object is acquired. The depth information obtained by the first infrared camera 420 and the 2D information of the target object obtained by the RGB camera 440 can be combined to obtain the Red Green Blue Depth (RGBD) information. Based on the RGBD information, 3D image recognition and 3D image reconstruction can be effectively carried out. The method for image recognition will not be further discussed here.

### EMBODIMENT TWO

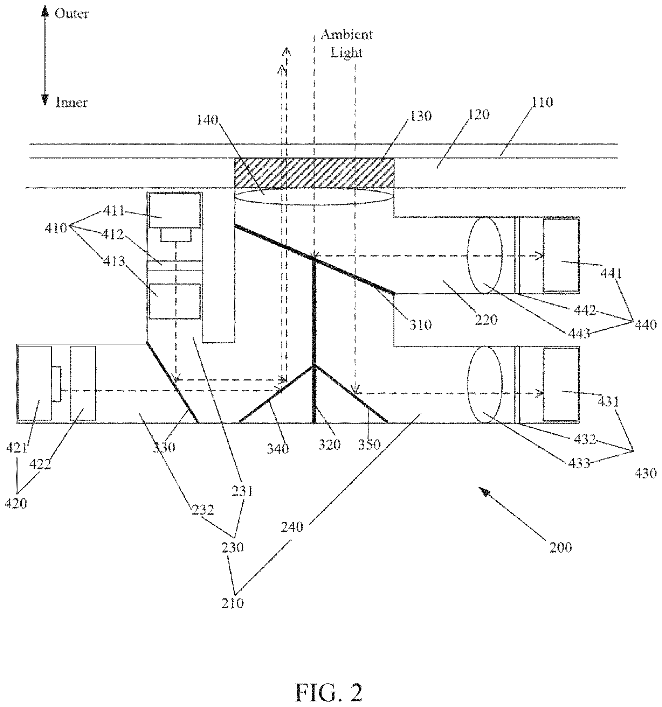

Referring to FIG. 2, in this embodiment, the structures and operating principles of each component are generally the same as those of Embodiment One, and the details are not repeated here. The main difference lies in the layout of the first channel 210. In Embodiment One, as shown in FIG. 1, the first channel 210 is a vertical channel separated by the infrared light separating wall 320, the second extension channel 232 and the fourth channel 240 can be formed along the vertical direction. As such, the infrared emitter 420 and the first infrared camera 430 can be arranged towards the lens 140. The infrared light emitted by the infrared emitter 420 can be directly emitted to the lens 140 through the first dichroic filter 310. The first infrared camera 430 can receive infrared light directly from the lens 140. In contrast, in this embodiment, the layout of the first channel 210 is as follows.

The cross-section of the third channel 230 is F-shaped. A first infrared reflector 340 is arranged at a corner of the third channel 230. The first extension channel 231 is arranged to be vertical with respect to the second extension channel 232 again. The infrared light emitted by the infrared emitter 420 passes through the first reflector 330 and then incidents on the first infrared reflector 340. The infrared light emitted by the infrared dot projector 410 is reflected by the reflective surface of the first reflector 330 and then incidents on the first infrared reflector 340. The infrared light that incidents the first infrared reflector 340 is specularly reflected, and then incidents into the first dichroic filter 310. The other aspects are the same as those in Embodiment One, and which are not repeated here.

The cross-section of the fourth channel 240 is L-shaped. A second infrared reflector 350 is arranged at a corner of the fourth channel 240. The infrared light incidents on the lens 140 and transmitted through the first dichroic filter 310 is reflected by the second infrared reflector 350, and reaches the first infrared camera 430. The other aspects are the same as those in Embodiment One, and which are not repeated here.

It is noted that this embodiment is similar to Embodiment One in technical principle. Through the above differences, compared with Embodiment One, the length of the optical channel 200 is effectively reduced along the depth direction, such that the structural layout of the optical channel 200 is more compact. The thickness of the user equipment provided with such an optical channel is reduced.

### EMBODIMENT THREE

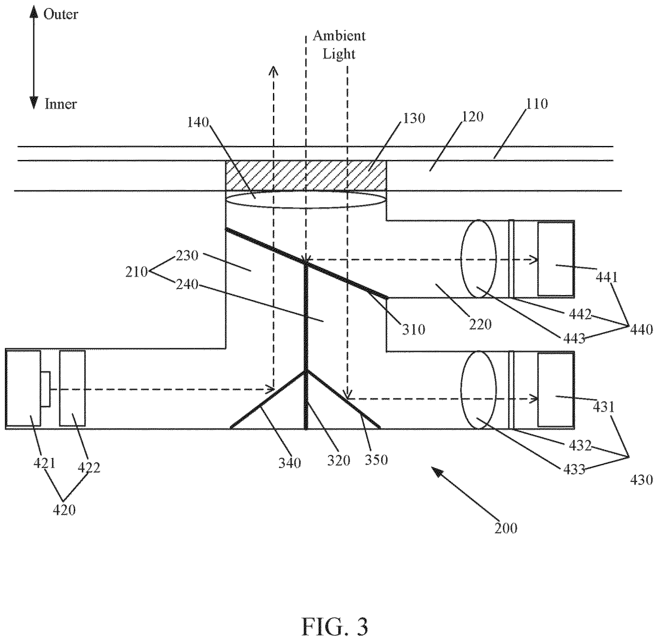

Referring to FIG. 3, in this embodiment, the structure and operating principle of the device for 3D recognition are generally the same as Embodiment Two, which can effectively reduce the thickness of the user equipment. The main difference between this embodiment and Embodiment Two lies in that the first reflector 330 and the infrared dot projector 410 are eliminated. Due to such an elimination, it is not necessary to arrange the first extension channel 231 within the third channel 230 in this embodiment. The cross-section of the third channel 230 is L-shaped. Infrared light emitted from the infrared emitter 420 is reflected directly by the first infrared reflector 340 towards the first dichroic filter 310.

It is noted that, due to the elimination of the infrared dot projector 410, the second VCSEL 421 of the infrared emitter 420 in this embodiment is provided as a high-power VCSEL in order to realize the single-lens application in the TOF scheme, thus a high-power floodlight illuminator is formed. The infrared light of the high-power VCSEL is diffused by the diffuser 422 to emit TOF surface-emitting light. Thereby, a 3D image can be generated with one shot. The details of the imaging will not be further discussed here. At the same time, due to the difference in the infrared light emitted by the infrared emitter 420 from that of Embodiment Two, the internal structure of the first infrared camera 430 can be adjusted accordingly to the extent that a 3D image can be obtained when the infrared light reflected by the target object is received.

Except for the above differences, the other structures of this embodiment are the same as those discussed in Embodiment Two, and which are not repeated here for the sake of brevity.

### EMBODIMENT FOUR

In this embodiment, the structure and operating principle of the device for 3D recognition are generally the same as those discussed in Embodiment One, with the main differences lie in the following.

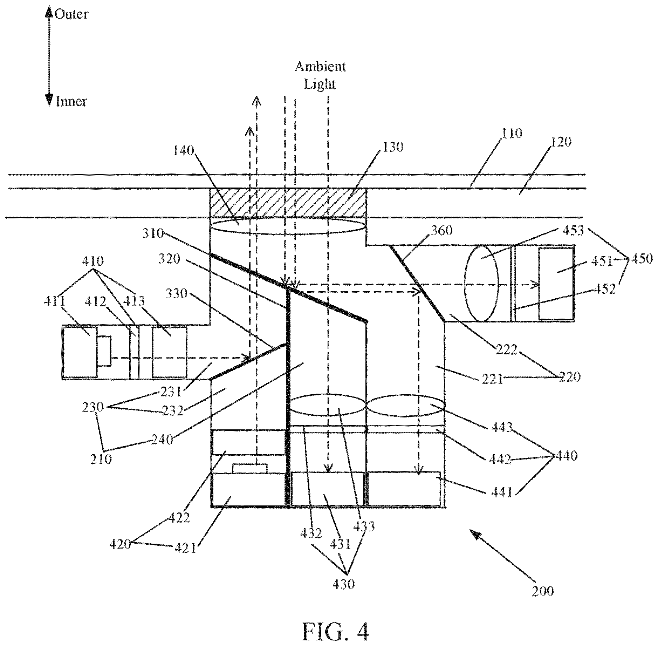

Referring to FIG. 4, the cross-section of the second channel 220 is T-shaped, and which is divided into a third extension channel 221 and a fourth extension channel 222 by a second dichroic filter 360. A second infrared camera 450 is arranged within the fourth extension channel 222. An RGB camera 440 is arranged within the third extension channel 221. The second dichroic filter 360 can be made of the same material and structure as the first dichroic filter 310, and which will not be further discussed here. The light incidents on the lens 140 and is then reflected by the first dichroic filter 310, with most of the reflected light visible light, and a small part infrared light. After incidence on the second dichroic filter 360, the infrared light is transmitted into the second infrared camera 450, and the visible light is reflected to the RGB camera 440. By introducing the second infrared camera 450, a binocular camera for structured light can be formed along with the first infrared camera 430. The complex calibration of the infrared dot projector 410 can be eliminated. At the same time, the structured light can be captured by the second infrared camera 450 to increase the set feature information of the object surface, which can facilitate the matching of weak texture or repeated texture regions in binocular stereo vision. At the same time, in the monocular camera scene, the coded light spots emitted by the infrared dot projector 410 are easily submerged by sunlight. The binocular camera with structured light can measure the depth information in the indoor environment, and when the structured light fails due to outdoor illumination, a pure binocular scheme is switched to, which increases the set features of the object surface and further improves the reliability and anti-interference.

The second infrared camera 450 includes a second infrared photosensitive substrate 451, a second infrared low-pass filter 452, and a third lens set 453. The structure of the second infrared camera 450 is similar to that of the first infrared camera 430, and which will not be repeated here for brevity.

Except for the above differences, the other structures of the device for 3D recognition discussed in this embodiment are the same as those discussed in Embodiment One, and which are not repeated here for the sake of brevity.

It is noted that throughout Embodiments One to Four, the device for 3D recognition is arranged at an inner side of the display screen 120, so as to reduce the area of the light transmission enhancement area 130 and improve the user experience, which are directed to the case of the under-screen front camera. For a user equipment that does not adopt the under-screen front camera, the device for 3D recognition in the Embodiments One through Four can also be arranged in the "notch" area of the display screen 120, so as to reduce the "notch" area, reduce the footprint of camera on the screen, and improve the user experience.

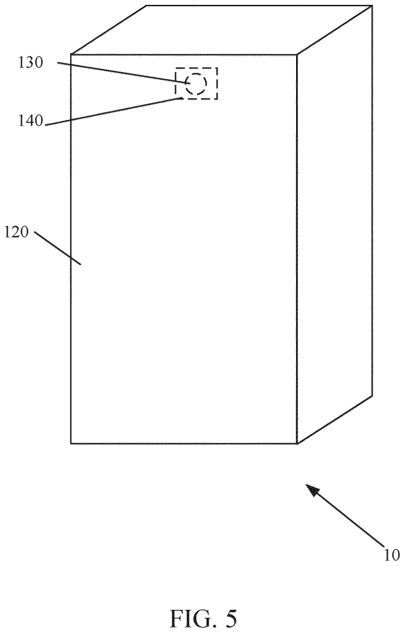

According to an embodiment, a user equipment is provided. As shown in FIG. 5, the user equipment 10 includes,
a device for 3D recognition described in any one of the above embodiments; and
a display screen 120. The device for 3D recognition is arranged at an inner side of the display screen 120, and the area of the display screen 120 corresponding to the lens 140 of the device for 3D recognition is the light transmission enhancement area 130.

It should be noted that, with reference to FIG. 1, a Touch Pad (TP) cover plate 110 can be additionally arranged on the surface of the display screen 120. In such a case, from outer to inner are the TP cover plate 110, the display screen 120, the light transmission enhancement area 130, and the lens 140 respectively. The device for 3D recognition described in any of the above embodiments is arranged in the optical channel 200 corresponding to the lens 140.

It is noted that in the conventional scheme in which the device for 3D recognition is arranged in parallel with the RGB camera, the RGB camera and the device for 3D recognition are respectively equipped with lenses. In such a case, the area of the light transmission enhancement area 130 is large and is in a "notch" shape, which affects the user experience. With the device for 3D recognition in this embodiment, the 3D recognition assembly and the RGB lens 440 are arranged in the same optical channel 200. The sharing of a single lens 140 is realized by controlling the propagation path of infrared light and visible light. Only one lens 140 is needed to be configured at the front end of the user equipment 10, and special light transmission treatment is carried out in the corresponding area. As such, the area of the light transmission enhancement area 130 is greatly reduced, thereby the display area occupied by the light transmission enhancement area 130 is reduced. The overall appearance and display effect of the user equipment and the user experience are improved.

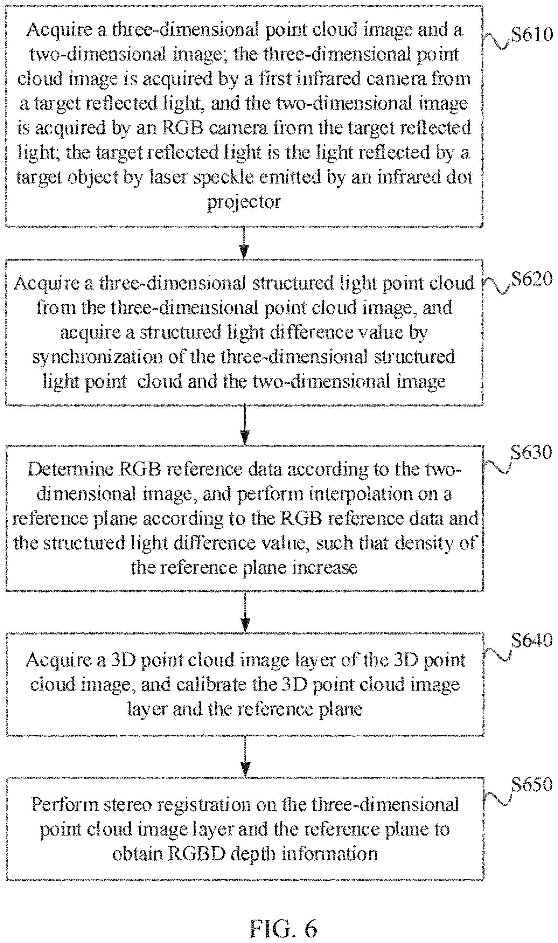

FIG. 6 depicts a flowchart showing a method for image enhancement according to an embodiment. The method is applied to a device for 3D recognition. As shown in FIG. 1 or FIG. 2, the device for 3D recognition includes a lens 140 and an optical channel/passage/path 200. The optical channel 200 is arranged at the inner side of the lens 140. An RGB camera 440, an infrared emitter 420, an infrared dot projector 410, a first infrared camera 430, and a first dichroic filter 310 are arranged within the optical channel 200. Visible light of ambient light is reflected to the RGB camera 440 by the first dichroic filter 310. Infrared light of ambient light is transmitted to the first infrared camera 430 through the first dichroic filter 310. Infrared light emitted by the infrared emitter 420 and the infrared dot projector 410 is transmitted to the lens 140 through the first dichroic filter 310.

The method includes but is not limited to the following operations.

At operation S610, a 3D point cloud image, and a 2D image are acquired. The 3D point cloud image is acquired by a first infrared camera with a target reflected light, and the 2D image is acquired by an RGB camera with the target reflected light. The target-reflected light is the light reflected by a target object by laser speckles emitted by an infrared dot projector.

At operation S620, a 3D structured light point cloud is acquired from the 3D point cloud image, and a structured light difference value is acquired by synchronization of the 3D structured light point cloud and the 2D image.

At operation S630, RGB reference data is determined according to the 2D image, and interpolation is performed on a reference plane according to the RGB reference data and the structured light difference value, such that dencity of the reference plane increase.

At operation S640, a 3D point cloud image layer of the 3D point cloud image is acquired, and the 3D point cloud image layer and the reference plane are calibrated.

At operation S650, stereo registration is performed on the 3D point cloud image layer and the reference plane to obtain RGBD information.

It should be noted that when the device for 3D recognition adopts the structure of the embodiment shown in FIGS. 1 and 2, the third channel 230 and the fourth channel 240 is close to each other in the scheme where a single lens is provided, the baseline is almost zero. In this case, the incident angle of the laser speckle projected by the infrared dot projector 410 is relatively small, which leads to an increase in the density error of the calibration reference plane and the noise in the depth calculation. Thus, the accuracy of the measured depth information is affected to some extent. In order to realize 3D recognition, it is necessary to synchronize the 2D image acquired by RGB camera 440 with the 3D point cloud image acquired by first infrared camera 430 for enhancement calculation, so as to improve the reference plane density and ensure more accurate stereo matching.

It should be noted that the size of the RGB camera is larger than that of the structured light lens, so the light input and imaging radius are also larger. After parameter calibration, the synchronization between the 3D structured light point cloud and the 2D image can increase the difference between receiving and sending structured light when the baseline is close to zero, thus the difference value of structured light is acquired.

It should be noted that laser speckles are generated by random scatterers irradiated by coherent light, which is a random process. It is necessary to calculate the intensity distribution, contrast, and motion law of speckle by probability statistics. Therefore, laser speckles are highly random, and different patterns will appear with different distances, that is, the speckle patterns in any two places in the same space are different. In this embodiment, after the laser speckle transmitted by the infrared dot projector 410 is reflected by the target object, the structured light difference value is obtained from the 3D point cloud image obtained by the first infrared camera 430, and according to the synchronization between the 3D structured light point cloud of the 3D point cloud image and the 2D image. Then the interpolation is carried out on the reference plane according to the structured light difference value. Such that, an increase in values of the density of the reference plane on the 2D plane is achieved, so as to facilitate the subsequent matching to obtain RGBD information. It can be understood that, the acquisition of the 3D structured light point clouds and 3D point cloud image layer from 3D point cloud images is well-known to those having ordinary skills in the art, and which will not be repeated here.

It should be noted that after obtaining the reference plane with the increase in values of the density, each layer of the 3D point cloud image layer of dot projection physical reflection map layer can be matched with the reference plane, so as to realize stereo matching and obtain parallax. It is also possible to fuse the 3D point cloud image layer with the RBG image, and to match with the reference plane to calculate the parallax, so as to further calculate the depth information of RGBD. The matching process can be realized by conventional matching cost, cost aggregation, parallax calculation, and parallax refinement, which is not limited here.

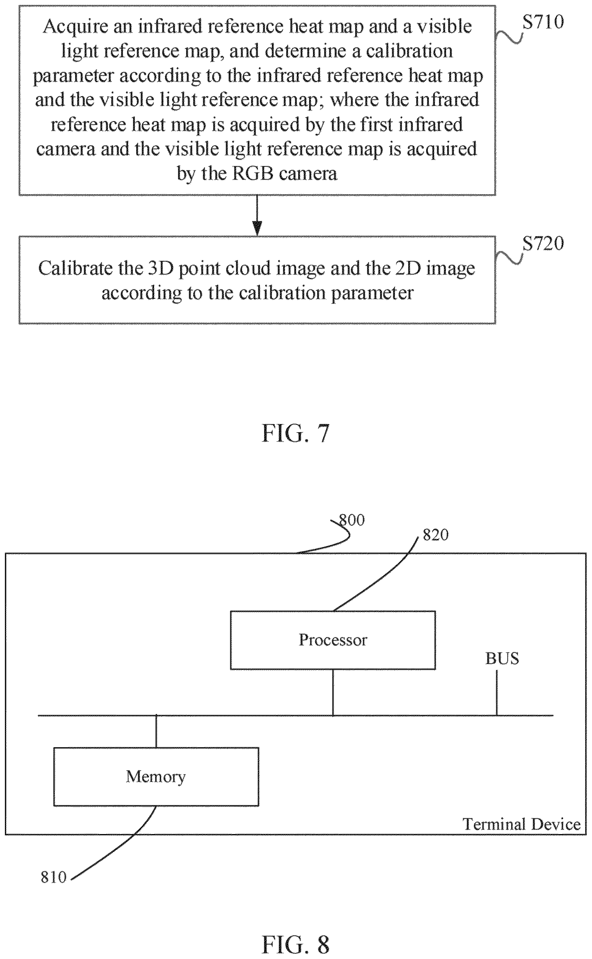

Referring to FIG. 7, in an embodiment, before S620 described in the embodiment shown in FIG. 6, the method further includes but is not limited to the following operations.

At operation S710, an infrared reference heat map, and a visible light reference map are acquired, and a calibration parameter is determined according to the infrared reference heat map and the visible light reference map. The infrared reference heat map is acquired by the first infrared camera and the visible light reference map is acquired by the RGB camera.

At operation S720, the 3D point cloud image, and the 2D image are calibrated according to the calibration parameter.

It should be noted that when infrared reference heat map and visible light reference map are acquired, shapes with sharp contrast such as black-and-white checkerboard or dot map can be utilized as calibration plates, and infrared light and visible light are irradiated at the same time, and images are simultaneously acquired by the first infrared camera and RGB camera to obtain infrared reference heat map and visible light reference map. Then the calibration of the first infrared camera and RGB camera can be realized by conventional calibration methods to obtain calibration parameters. For example, an external parameter, an internal parameter and a distortion coefficient are output by Zhang Zhengyou's calibration method. The external parameter can include the position relationship before the two cameras, such as a rotation matrix and a translation vector for the world coordinate system. The internal parameter can be a parameter associated with the first infrared camera and the RGB camera, such as a focal length and a principal point.

It is noted that the process of calibrating 3D point cloud images and 2D images includes translation and rotation operations for each coordinate point. In this process, 3D coordinates include three coordinate axes of X, Y, and Z axes, while 2D images only have two coordinate axes of X and Y axes. In order to avoid the loss of Z-axis coordinates, homogeneous coordinates can be introduced in the conversion process, so as to realize linear changes. The details of the calibration process are not further discussed here.

FIG. 8 depicts a user equipment according to an embodiment. The user equipment 800 includes a memory 810, a processor 820, and a computer program stored in the memory 810 and executable by the processor 820.

The processor 820 and the memory 810 may be connected by a bus or other means.

Non-transitory software programs and instructions for the method for image enhancement are stored in the memory 810 which, when executed by the processor 820, causes the processor 820 to carry out the operations in any one of the methods for image enhancement in any one of the embodiments as described above, e.g., S610 to S650 described in conjunction with FIG. 6, or S710 to S720 described in conjunction with FIG. 7.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

In addition, an embodiment of the present invention further provides a computer-readable storage medium, which stores a computer-executable instruction which, when executed by a processor or controller, for example, by a processor in the above-described embodiment directed to a user equipment, causes the processor to carry out the method for image enhancement above, e.g., S610 to S650 described in conjunction with FIG. 6, or S710 to S720 described in conjunction with FIG. 7. It shall be appreciated by a person having ordinary skills in the art that all or some of the steps and systems disclosed above can be implemented as software, firmware, hardware, and their appropriate combinations. Some or all physical components can be implemented as software executed by a processor, such as a central processing unit, a digital signal processor, or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules, or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

According to an embodiment, a device for 3D recognition is provided. The device includes lens and an optical channel/passage/path arranged at an inner side of the lens; with an RGB camera, a 3D recognition assembly, and a first dichroic filter arranged within the optical channel. The first dichroic filter is configured to reflect visible light of ambient light to the RGB camera, and to transmit infrared light transmitted and received by the 3D recognition assembly. According to this embodiment, the RGB lens and the 3D recognition assembly can be simultaneously arranged in the optical channel at an inner side of the lens. Hence, the lens is shared by the front-facing camera and the 3D recognition assembly, such that the area for special treatment to improve the light transmittance is reduced to the size of a single lens, and the display effect of the screen is effectively improved, the user experience is improved.

Described above is a description of several embodiments of the present invention, but the present invention is not limited to the above embodiments. Those having ordinary skills in the art can various equivalent modifications or substitutions without departing the scope of the present invention, and these equivalent modifications or substitutions are within the scope defined by the claims of the present invention.

## Claims

1. A device for three-dimensional, 3D, recognition, arranged at an inner side of a display screen of a user equipment, the device comprising:
a lens; and
an optical channel arranged at an inner side of the lens; wherein
an Red Green and Blue, RGB, camera, a 3D recognition assembly, and a first dichroic filter are arranged within the optical channel; the first dichroic filter is configured to reflect visible light of ambient light to the RGB camera, and to transmit infrared light transmitted and received by the 3D recognition assembly.

2. The device according to claim 1, wherein:
the first dichroic filter is arranged to divide the optical channel into a first channel and a second channel, the 3D recognition assembly is arranged within the first channel, and the RGB camera is arranged within the second channel.

3. The device according to claim 2, wherein:
an infrared light separating wall is arranged within the first channel, the infrared light separating wall is connected to the first dichroic filter, and is arranged to divide the first channel into a third channel and a fourth channel; and
the 3D recognition assembly comprises an infrared light emitting component, and a first infrared camera , wherein the infrared light emitting component is arranged within the third channel; an infrared light emitted by the infrared light emitting component is transmitted to the lens through the first dichroic filter; the first infrared camera is arranged within the fourth channel; and the first infrared camera is configured to receive the infrared light of the ambient light transmitted from the first dichroic filter.

4. The device according to claim 3, wherein:
the third channel comprises a first extension channel and a second extension channel, a first reflector is arranged between the first extension channel and the second extension channel, and the first reflector is an infrared total reflection lens or a time-division reflector;
the infrared light emitting component comprises a first emitter and a second emitter, wherein the first emitter is arranged in the first extension channel and the second emitter is arranged in the second extension channel, wherein the infrared light emitted by the first emitter is reflected to the first dichroic filter by the first reflector, and the infrared light emitted by the second emitter is transmitted to the first dichroic filter through the first reflector; and
the first emitter is an infrared emitter, and the second emitter is an infrared dot projector; or,
the first emitter is the infrared dot projector, and the second emitter is the infrared emitter;
wherein, the infrared dot projector successively comprises, along a direction at which the infrared light is emitted, a first Vertical Cavity Surface Emitting Laser, VCSEL, a Wafer-Level Optics, WLO, and an Optical Diffraction Element, DOE, and the infrared emitter successively comprises, along the direction at which the infrared light is emitted, a second VCSEL, and a diffuser.

5. The device according to claim 4, wherein:
a first infrared reflector is arranged within the third channel, and the first infrared reflector is configured to reflect infrared light transmitted or reflected by the first reflector to the first dichroic filter.

6. The device according to claim 3, wherein:
the infrared light emitting component is an infrared emitter, and the infrared emitter successively comprises, along a direction at which the infrared light is emitted, a second VCSEL, and a diffuser.

7. The device according to claim 6, wherein:
a first infrared reflector is arranged within the third channel, and the first infrared reflector is configured to reflect the infrared light emitted by the infrared emitter to the first dichroic filter.

8. The device according to any one of claims 3 to 7, wherein:
the first infrared camera comprises successively, along a direction at which the infrared light incidents, a first lens set, a first infrared low-pass filter, and a first infrared photosensitive substrate.

9. The device according to claim 8, wherein:
a second infrared reflector is arranged within the fourth channel, the second infrared reflector is configured to reflect the infrared light of the ambient light transmitted from the first dichroic filter to the first infrared camera.

10. The device according to any one of claims 3 to 7, wherein:
the RGB camera comprises, successively along a direction at which the visible light incidents, a second lens set, an infrared medium filter, and a visible light photosensitive substrate.

11. The device according to claim 10, wherein:
the second channel comprises a third extension channel, and a fourth extension channel; wherein the RGB camera is arranged within the third extension channel, and a second infrared camera is arranged within the fourth extension channel;
a second dichroic filter is arranged between the third extension channel and the fourth extension channel, and the second dichroic filter is configured to reflect the visible light reflected by the first dichroic filter to the RGB camera and to transmit the infrared light reflected by the first dichroic filter to the second infrared camera; and
the second infrared camera comprises successively, along a direction at which the infrared light incidents, a third lens set, a second infrared low-pass filter, and a second infrared photosensitive substrate.

12. A user equipment, comprising,
the device for three-dimensional, 3D, recognition according to any one of claims 1 to 11; and
a display screen; wherein,
the device for 3D recognition is arranged at an inner side of the display screen, and an area of the display screen corresponding to the lens of the device for 3D recognition is a light transmission enhancement area.

13. A method for image enhancement, applied to a device for three-dimensional, 3D, recognition; wherein,
the device comprises:
a lens; and
an optical channel; the optical channel is arranged at an inner side of the lens; an Red Green Blue, RGB, camera, an infrared emitter, an infrared dot projector, a first infrared camera, and a first dichroic filter are arranged within the optical channel; visible light of ambient light is reflected to the RGB camera by the first dichroic filter; infrared light of ambient light is transmitted to the first infrared camera through the first dichroic filter; and infrared light emitted by the infrared emitter and the infrared dot projector is transmitted to the lens through the first dichroic filter; and
the method comprises,
acquiring a 3D point cloud image and a two-dimensional, 2D, image; wherein the 3D point cloud image is acquired by the first infrared camera from a target reflected light, and the 2D image is acquired by the RGB camera from the target reflected light; and the target reflected light is light reflected by a target object by laser speckles emitted by the infrared dot projector;
acquiring a 3D structured light point cloud from the 3D point cloud image, and acquiring a structured light difference value by synchronization of the 3D structured light point cloud and the 2D image;
determining RGB reference data according to the 2D image, and performing interpolation on a reference plane according to the RGB reference data and the structured light difference value, so as to increase the density of the reference plane;
acquiring a 3D point cloud image layer of the 3D point cloud image, and calibrating the 3D point cloud image layer and the reference plane; and
performing stereo registration on the 3D point cloud image layer and the reference plane to acquire Red Green Blue Depth, RGBD, information.

14. The method according to claim 13, wherein before acquiring the 3D structured light point cloud from the 3D point cloud image, the method further comprises:
acquiring an infrared reference heat map and a visible light reference map, and determining a calibration parameter according to the infrared reference heat map and the visible light reference map, wherein the infrared reference heat map is acquired by the first infrared camera and the visible light reference map is acquired by the RGB camera; and
calibrating the 3D point cloud image and the 2D image according to the calibration parameter.

15. A user equipment, comprising a memory, a processor, and a computer program stored in the memory and executable by the processor which, when executed by the processor causes the processor to carry out the method as claimed in claims 13 or 14.

16. A computer-readable storage medium storing a computer-executable instruction which, when executed by a processor, causes the processor to carry out the method as claimed in claims 13 or 14.
